# EUROPEAN PATENT SPECIFICATION

(11) **EP 2 818 235 B1**
(45) Date of publication and mention of the grant of the patent: **11.05.2016**
(21) Application number: 14174605.7
(22) Date of filing: 26.06.2014
(51) Int. Cl.: F16K 3/34, F16K 3/02, B29B 7/24

(54) **Dosing apparatus**
Dosierungsvorrichtung
Appareil de dosage

(30) Priority: 28.06.2013 IT MO20130191
(43) Date of publication of application: 31.12.2014
(73) Proprietor: Piovan S.P.A., 30036 Santa Maria di Sala (VE) (IT)
(72) Inventor: Bellio, Enrico, 31050 Ponzano V.to (Treviso) (IT); Battaglia, Andrea, 35013 Cittadella (Padova) (IT)
(74) Representative: Pandolfi, Paolo

(56) References cited:
- EP-A2- 0 086 259
- EP-A2- 0 401 634
- DE-A1- 3 308 106
- DE-U1- 8 612 504
- NL-A- 9 200 532
- US-A- 3 822 866
- US-A- 4 681 613
- US-A- 5 895 028

## Description

The invention relates to dosing apparatuses for plastic materials made of granules and/or micro-granules and/or flakes or the like, in particular the invention relates to dosing apparatuses for machines intended for feeding plants for treating and transforming the aforesaid plastic materials, for example plants for extruding and subsequently moulding by injection, blowing, compression.

In dosing and/or mixing machines, the dosing apparatuses dispense to the mixing unit the exact quantities of the different plastic products, for example plastic resins, which make up the mixture to be treated. Typically, dosing and/or mixing machines comprise a plurality of loading tanks or hoppers that contain respective plastic products and/or additives in granule and/or micro-granule and/or powder form that feed a dosing apparatus of gravimetric or volumetric type. Some dosing and/or mixing machines comprise a dosing apparatus for each product hopper, the dosing apparatuses supplying an underlying dosing and/or mixing unit.

Such dosing apparatuses, as is known to a person skilled in the art, can be used in certain applications in the simplest form thereof merely as a dosing member connected directly to conveying systems of the plastic materials and not necessarily to dosing and/or mixing systems.

In dosing apparatuses of volumetric type means are used like screw conveyors, screws, drums, and discs that draw from the hoppers preset volumes of material to be transferred to the mixing unit. The dosed volume depends on the dimensions and geometrical features of the volumetric dosing means and on dosing time. Such systems are nevertheless suitable for applications in which the required dosing precision is not high and for dosing a plurality of products having features (specific weight, dimensions, flowability, etc) that are similar to one another.

In dosing apparatuses of gravimetric type weighing systems are provided that control continuously and retrospectively the quantity and/or the volume of product exiting the hoppers by measuring the weight variation of the latter during the exit of the product (weight-loss gravimetric dosing and/or batch dosing). Adjusting means adjusts the flow of product exiting the hoppers on the basis of the indications of the weighing system. More precisely, the flow of exiting product is arrested when a preset quantity of product detected by the weighing systems has been detected.

Gravimetric dosing apparatuses are also used for applications in which the required dosing precision is high (less than 1% by weight).

Known volumetric and/or gravimetric dosing apparatuses are provided with members such as a gate valve, screw conveyor, drum, dosing disc that use linear or rotational movements to selectively open or close a dosing and discharging opening of the hopper.

In particular, in apparatuses provided with a dosing gate valve, the shutter (gate valve) is moved by a pneumatic linear actuator between an open position and a closed position.

The quantity of dosed product depends on the flowrate of the exiting product and on the time during which the shutter is open. In turn, the flowrate of the exiting product depends on the dimensions of the discharge opening and on the features (specific weight, dimensions, flowability, etc) of the dosed material (type of product). For dosing high quantities of product a lengthy shutter opening time and/or large dimensions of the discharge opening are therefore required. On the other hand, in order to dose smaller quantities of product a limited opening time and/or limited dimensions of the discharge opening are required.

By using a discharge opening with intermediate dimensions, there is a need, in the case of large doses, to set lengthy shutter opening times, thus causing lengthy dosing times and thus a reduction in productivity in relation to the cycle time of the transforming apparatus.

On the other hand, in the case of small doses, the opening times cannot be reduced below a certain limit set by the dynamics of the shutter, by the mechanical features of the actuator and/or by the dynamic response times of the pneumatic drives and lastly by dosing precision. In particular, during the opening and closing steps a certain quantity of material that is not precisely quantifiable exits the discharge opening whilst the shutter moves, said quantity being the more significant the smaller the quantity of product to be dosed.

A drawback of known dosing apparatuses thus resides in the fact that they have limited dosing fields or ranges that is in order not to encounter the drawbacks set out above they have to be dimensioned according to the quantities of product to be dosed and/or the physical features thereof. More precisely, the dimensions of the discharge opening and of the shutter have to be dimensioned according to the product to be dosed (quantity, chemical/physical features). It is thus necessary, in the event of modification of production parameters and/or products type, to replace at least partially the dosing apparatuses with consequent prolonged downtime and high maintenance costs.

Another drawback of dosing systems provided with a gate valve shutter driven by a pneumatic actuator is that in the case of not constant supply pressure of the compressed-air line this pressure variation directly affects the driving time of the actuator and consequently dosing precision.

Another drawback of gate valve shutter dosing systems driven by a pneumatic actuator is the driving time required to open and close the shutter completely, this time being in certain cases so reduced as to require very rapid movement that greatly wears mechanical members with consequent fatigue failure phenomena.

EP 401634 A2 discloses a metering valve for the metered delivery of color pigments in apparatuses for mixing coloring substances.

NL 9200532 A describes a metering apparatus for fluids.

An object of the present invention is to improve known dosing apparatuses for plastic materials made of granules or micro-granules and/or flakes or similar, in particular volumetric and/or gravimetric dosing apparatuses that are associable with machines that feed plants for treating and transforming the aforesaid plastic materials.

Another object is to make a dosing apparatus that enables different quantities and types of products to be dosed precisely and effectively and a wide dosing range to be obtained without the need to change parts and components.

Another object is to obtain a dosing apparatus having a simple and compact structure that is easily cleanable in situations of frequent changes of material.

A further object is to obtain a dosing apparatus having a structure that is such as to minimise wear or breakage phenomena.

Such objects and still others are achieved by a mixing apparatus according to one or more of the claims set out below.

The invention can be better understood and implemented with reference to the attached drawings that illustrate some embodiments thereof by way of non-limiting example, in which:
- figure 1 is a perspective view of the dosing apparatus of the invention;
- figure 2 is a side view of the apparatus in figure 1;
- figure 3 is a front view of the apparatus in figure 1;
- figure 4 is a partial section according to the line IV-IV of figure 3 in which a shutter element of the dosing apparatus is in an open position;
- figure 5 is an enlarged partial section like that of figure 4 that illustrates the shutter element in a closed position;
- figure 6 is a perspective cross section of the apparatus in figure 1 devoid of a feeding hopper and with the shutter element in the closed position;
- figure 7 is a plan view of a dosing duct of the apparatus in figure 1;
- figure 8 is a graph that illustrates passage section variations of different dosing openings of the apparatus in figure 1 according to a stroke of the shutter element.

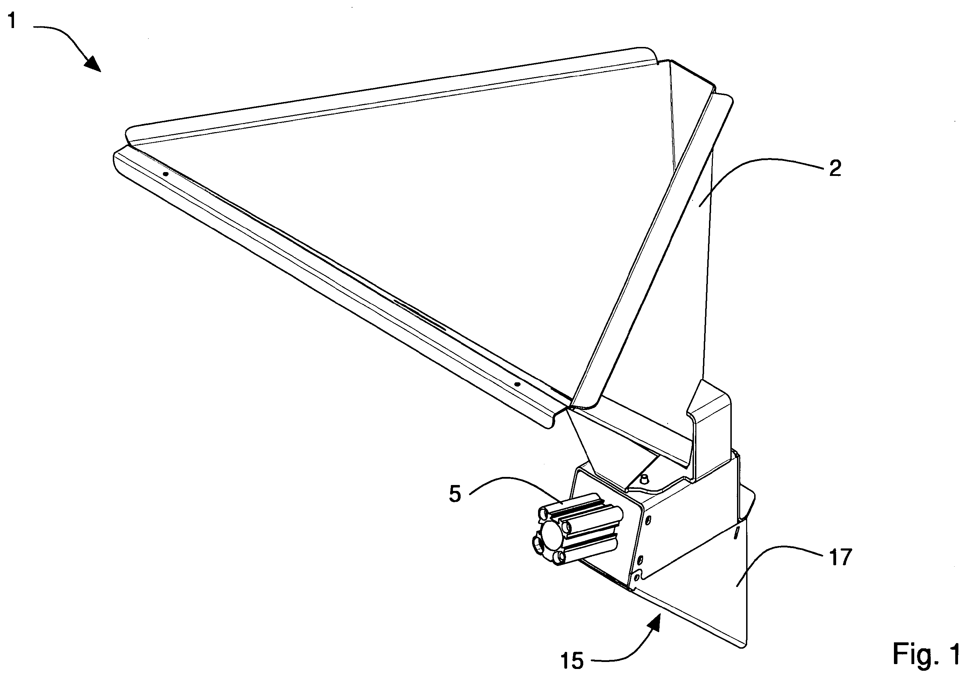

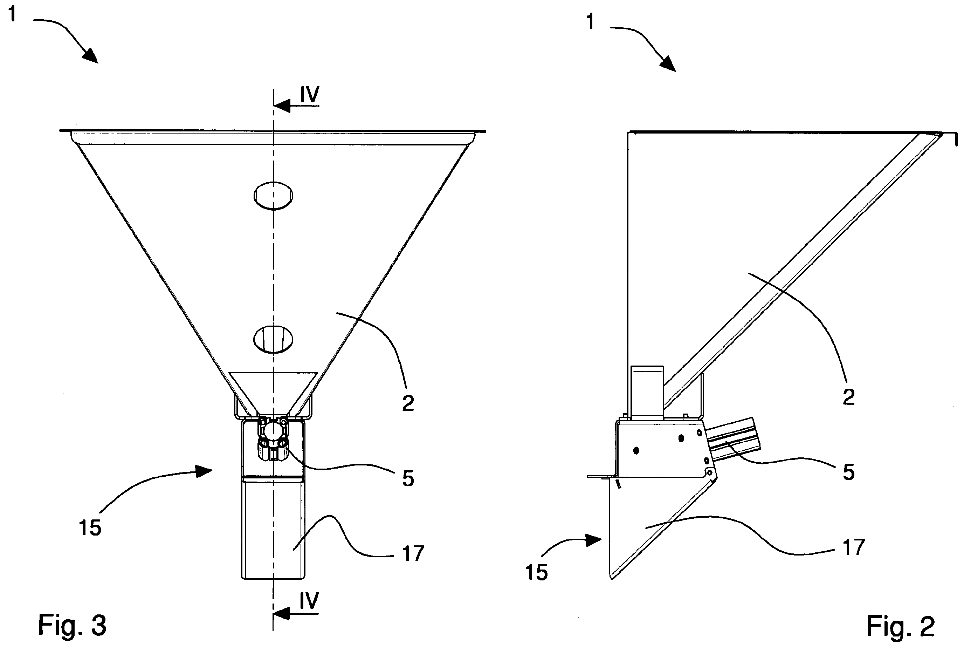

With reference to figures 1 to 7, a dosing apparatus 1 according to the invention is illustrated that is arranged for dosing a plastic product made of granules and/or micro-granules and/or in flakes, for example a plastic resin, and associable with a dosing and/or mixing machine intended for feeding a plant for treating and transforming the aforesaid plastic product, for example a plant for extruding and subsequently moulding by injection, blowing, compression.

The dosing apparatus 1 comprises one feeding hopper 2 suitable for containing the product and provided with a dosing duct 3 for the exiting of the product P and with a shutter element 4 that is movable along a longitudinal movement direction B and arranged for opening or closing the dosing duct 3 at a dosing opening 7 of the latter so as to permit or prevent the exiting of the product.

The shutter element 4 is moved by actuating means 5 along said movement direction B.

The shutter element 4 is slidably fixed to a casing 15 to which the actuating means 5 is fixed externally. The casing 15 comprises an exit chamber 16 that contains the dosing duct 3 and the shutter element 4, and a discharge duct 17 that conveys the product P outside the apparatus 1, for example to an underlying mixing unit. The casing 15 is fixed to the feeding hopper 2.

The dosing opening 7 has a section having a divergent shape and increasing area in the direction of an opening longitudinal movement of the shutter element 4, said section being arranged on a plane that is transverse to a descent direction A of the product and parallel to the movement direction B of the shutter element 4. The descent direction A of the product is, for example, vertical.

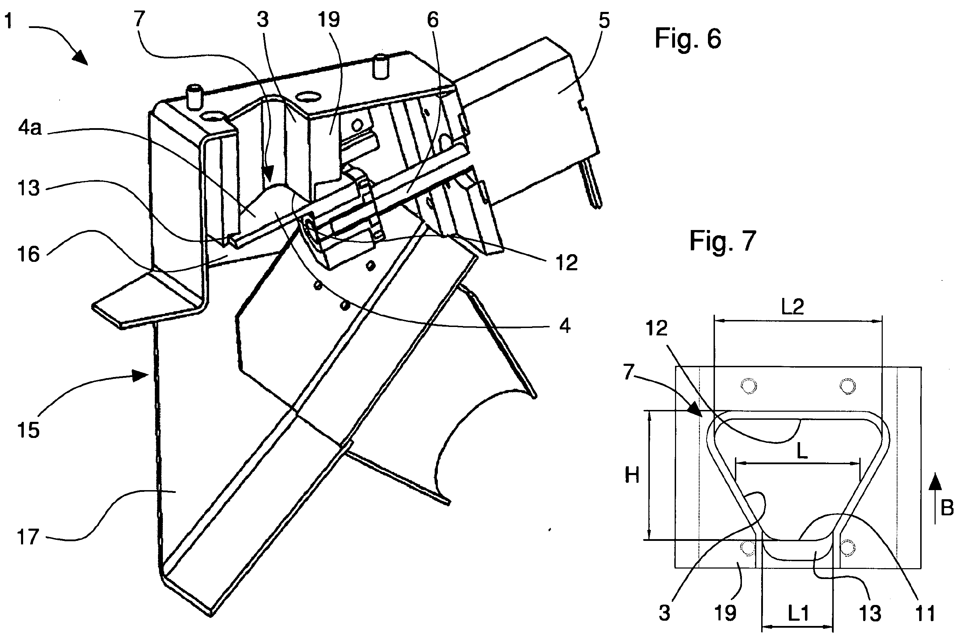

More precisely, the section of the dosing opening 7 has a divergent shape, for example a triangular or trapezoidal shape, starting from a first transverse edge 11 of the dosing opening 7 that is engaged by the shutter element 4 in a closed position C. As illustrated in particular in figure 7, the transverse dimension (width L) of the section of the dosing opening 7 (dimension that is transverse to a longitudinal direction that is parallel to the movement direction B) increases from a minimum value L1 at said first transverse edge 11 to a maximum value L2 at a second transverse edge 12 opposite the first transverse edge 11 with respect to a longitudinal dimension H parallel to the movement direction B.

The shutter element 4 moved along the movement direction B to open moves away from the first transverse edge 11 and enables the product to exit through a passage section (made by the shutter element 4 with the dosing opening 7) progressively increasing with the opening stroke of the shutter element 4. When the latter is in the maximum opening position D, the passage section coincides with the section of the passage opening 7.

As explained better further on in the description, the passage section thus varies in a non-linear manner, in particular in a parabolic manner, thus it depends on the linear movement in the movement direction B (movement of the actuator element 4) and on the variation of the transverse dimension (width L).

In the embodiment shown, the section has a trapezoidal shape, in particular with rounded vertexes (figure 7).

In one embodiment of the dosing apparatus 1 that is not shown in the figures, the section of the dosing opening 7 has a triangular shape, in particular with rounded vertexes.

The dosing duct 3 that extends along the descent direction A is made into a bush element 19 fixed removably to a bottom wall of the feeding hopper 2. The bush element 19 is housed inside the exit chamber 16.

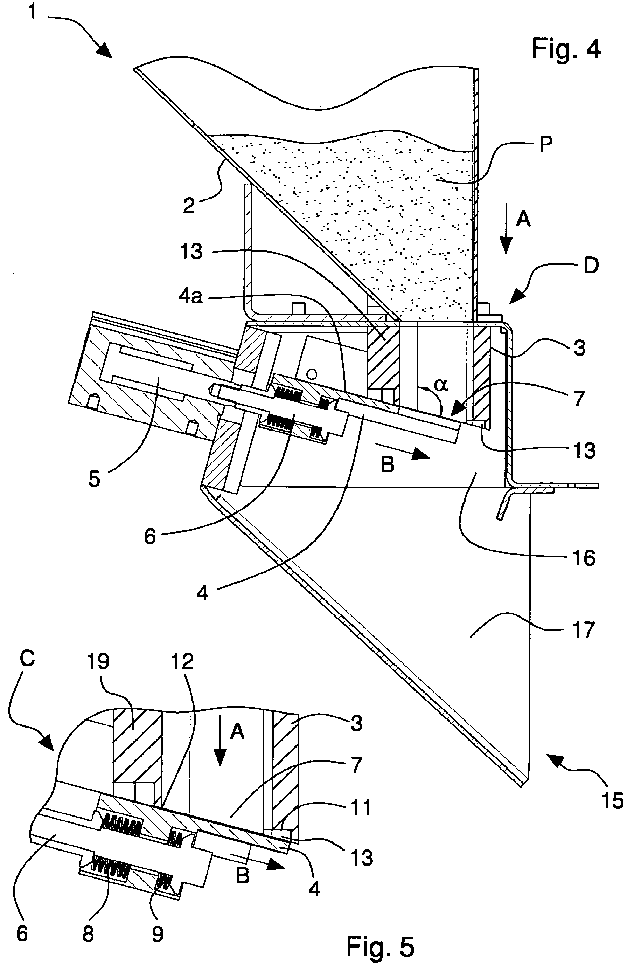

The dosing opening 7 and the shutter element 4 are tilted with respect to the descent direction A so that the first transverse edge 11 of the dosing opening 7 is further down than the descent direction A of the second transverse edge 12. In particular, the dosing opening 7 and the shutter element 4 are tilted with respect to said descent direction A by an angle α comprised between 95° and 120° (figure 4), in particular equal to 105°. The tilted arrangement of the actuator element 4 enables the actuator element 4 to be cleaned better inasmuch as the plastic product made of granules and/or micro-granules and/or flakes detach by the force of gravity from the upper surface 4a of the shutter element 4 during the opening movement, thus avoiding possible clogging or jamming of the apparatus 1.

At the first transverse edge 11 of the dosing opening 7 a shaped space 13 is provided that is able to receive the product P when the shutter element 4 is moved to the closed position C. In this manner, the plastic product made of granules and/or flakes is not crushed and/or compressed and/or cut between the upper surface 4a of the shutter element 4 and the edges of the dosing opening 7 in the closing movement. In addition to preserve the integrity of the plastic product P, it is avoided that the latter can adhere to the shutter element 4, compromising the regular operation thereof.

The actuating means 5 comprises an electric actuator, in particular provided with a position and/or speed feedback control, for example an electric step motor that is able to move the shutter element 4 in a controlled manner in position and/or speed.

The electric actuator can be of linear type, so as to drive directly the shutter element 4, or can be of the rotating type so as to drive the shutter element 4 by motion transforming means comprising, for example, a screw-ball nut screw assembly.

The actuator element 4 can thus be moved in such a manner as to open also partially the dosing opening 7 and/or with speed in the opening and closing movements that are selectable according to the quantity of product to be dosed and/or of the features of the plastic product (dimensions, flowability, etc). It is thus possible to adjust more accurately and precisely the dosing of the product P by shutting the opening of the dosing duct 3 and adjusting the speed and/or the open/closed position of the shutter element 4, for example in the case of small doses.

A pin 6 fixed to and driven by the actuating means 5 is connected to the shutter element 4 by elastic means 8, 9. The latter comprises one or more pairs of elastic elements exerting compression and/or traction and/or twisting that absorb possible shocks of the elastic element 4 during movement. The elastic element further acts as a damping system for assembly misalignments and/or processing tolerances and compensates for possible pointing due to wear generated between the sliding parts.

The operation of the dosing apparatus 1 of the invention provides control of the position and/or speed of the actuator element 4 that can open partially or completely the dosing opening 7 according to specific dosing requirements, defining passage sections the area of which is variable and adjustable at will and with precision.

As disclosed above, the particular divergent, trapezoidal or triangular shape, with an increasing area of the dosing opening 7 in the opening direction of the shutter element 4 enables a passage section for the exiting of the product P to be obtained that is variable in a non-linear manner according to the opening stroke of the shutter element 4. In particular, the passage section depends both on the linear movement in the movement direction B (movement of the shutter element 4) and on the variation of the transverse dimension (width L).

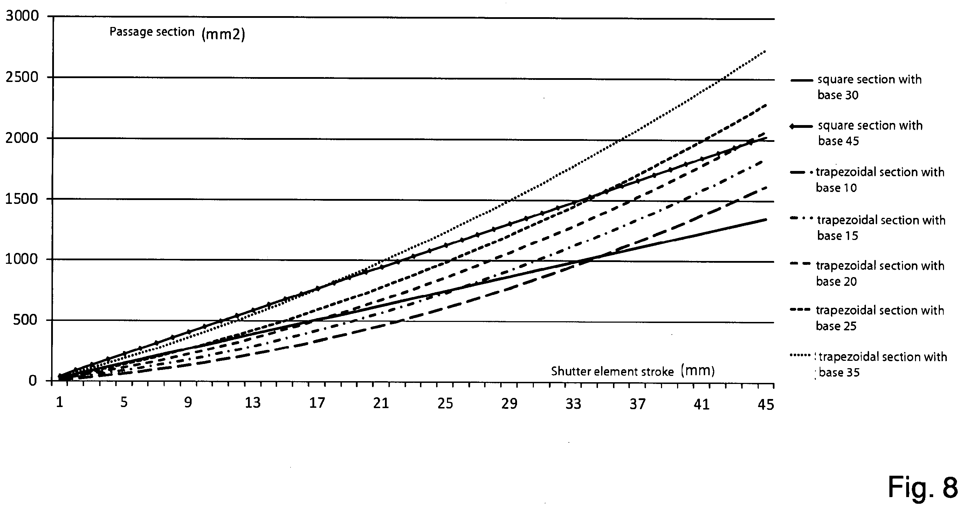

In figure 8, the variations or the trends of the passage sections of the dosing openings are shown according to the linear stroke of the shutter element 4, the dosing openings having a shape with a diverging and increasing section, in particular trapezoidal section (a dashed line) and having a rectangular section (continuous line).

In the case of dosing openings 7 having a traditional rectangular shape (transverse dimension or constant width) the passage section varies in a linear manner with the opening stroke, whereas in the case of openings 7 having a trapezoidal shape, the passage section varies in a non-linear manner, particularly in a parabolic manner, with the opening stroke.

It is noted that for limited strokes of the shutter element (reduced and partial openings) the passage sections of the dosing openings 7 having a trapezoidal shape are less than those of the dosing openings 7 having a rectangular shape. On the other hand, for wide strokes (almost complete openings) the passage sections of the dosing openings 7 having a trapezoidal shape are greater than those of the dosing openings 7 having a rectangular shape.

It is also noted that with triangular shapes of the dosing opening 7 trends of the passage section occur that are substantially the same as those obtained with trapezoidal shapes.

Owing to the dosing apparatus 1 of the invention provided with a divergent-section dosing opening 7 with a variable area in a non-linear manner and with a shutter element 4 driven in a controlled manner in position and/or speed by the actuating means 5, it is thus possible to dose in a precise and accurate manner small quantities of product and at the same time large quantities of product rapidly.

It is further possible to move the shutter element 4 with driving times that are not excessively reduced and movements that are not too rapid, so as to avoid or at least minimise phenomena of wear or breakage of the components of the apparatus (shutter element 4, dosing duct 3, pin 6 of the actuating means 5, etc.).

The simple and compact structure of the dosing apparatus 1 of the invention thus permits easy and rapid cleaning, in particular in the case of applications that require frequent changes of material. The tilted arrangement of the actuator element 4 permits better cleaning of the actuator element 4 during operation because the plastic product made of granules and/or micro-granules and/or flakes detaches by the force of gravity from the upper surface 4a of the shutter element 4 during the opening movement.

## Claims

1. Dosing apparatus, in particular associable with a dosing and/or mixing machine, for dosing at least one plastic product (P) made of granules and/or micro-granules and/or flakes, comprising at least one feeding hopper (2) for containing said product (P) and provided with a dosing duct (3) for the exiting of said product (P) and a shutter element (4) that is movable along a movement direction (B) and arranged for opening or closing said dosing duct (3) at a dosing opening (7) thereof in such a manner as to enable or prevent said product (P) from exiting, wherein said dosing opening (7) has a section having a divergent shape in the direction of an opening longitudinal movement of said shutter element (4), said section being arranged on a plane that is transverse to a descent direction (A) of said product (P) and parallel to said movement direction (B) of said shutter element *(4), **characterised in that*** said dosing opening (7) comprises a first transverse edge (11) engaged by said shutter element (4) in a closed position (C) and provided with a space (13) that is able to receive product when said shutter element (4) is moved and arranged in said closed position (C).

2. Apparatus according to claim 1, wherein said section of said dosing opening (7) has a diverging shape starting from a first transverse edge (11) of said dosing opening (7), said first transverse edge (11), which is transverse to said movement direction (B), being abutted by said shutter element (4) in a closed position (C) of said dosing opening (7).

3. Apparatus according to claim 1 or 2, wherein said section of the dosing opening (7) has a transverse dimension that increases from a minimum value (L1) at said first transverse edge (11) up to a maximum value (L2) at a second transverse edge (12), which is opposite the first transverse edge (11) with respect to a longitudinal dimension (H) parallel to said movement direction (B) so that a passage section defined by said shutter element (4) with said dosing opening (7) varies in a non-linear manner, in particular with a parabolic trend, as a function of a linear movement in the movement direction (B) of said shutter element (4).

4. Apparatus according to any preceding claim, wherein said dosing opening (7) has a section with a triangular or trapezoidal shape.

5. Apparatus according to any preceding claim, wherein said dosing duct (3) extends along said descent direction (A).

6. Apparatus according to any preceding claim, wherein said dosing opening (7) and said shutter element (4) are tilted with respect to said descent direction (A) so that a first transverse edge (11) of said dosing opening (7), abutted by said shutter element (4) in a closed position (C), is lower, with respect to said descent direction (A), than a second transverse edge (12) opposite said first transverse edge (11) with respect to said movement direction (B).

7. Apparatus according to claim 6, wherein said dosing opening (7) and said shutter element (4) are tilted with respect to said descent direction (A) by an angle (α) comprised between 95° and 120°, in particular equal to 105°.

8. Apparatus according to any preceding claim, comprising actuating means (5) for moving said shutter element (4) along said movement direction (B), said actuating means (5) comprising an electric motor.

9. Apparatus according to claim 8, wherein said actuating means (5) comprises an electric motor with position and/or speed feedback control, in particular an electric step motor that is able to move said shutter element (4) by controlling position and/or speed thereof.

10. Apparatus according to claim 8 or 9, comprising a pin (6) driven by said actuating means (5) and connected to said shutter element (4) by elastic means (8, 9).

11. Dosing and/or mixing machine for dosing and/or mixing plastic products made of granules and/or micro-granules and/or flakes, comprising at least one dosing apparatus (1) according to any preceding claim.

## Patentansprüche

1. Dosiervorrichtung, die insbesondere mit einer Dosier- und/oder Mischmaschine verbindbar ist, zum Dosieren mindestens eines Kunststoffprodukts (P), das aus Körnern und/oder Mikrokörnern und/oder Flocken besteht, mit mindestens einem Zufuhrtrichter (2) zum Enthalten des Produkts (P), der mit einem Dosierkanal (3) für den Austritt des Produkts (P) und einem Verschlusselement (4) versehen ist, das entlang einer Bewegungsrichtung (B) beweglich ist und zum Öffnen oder Schließen des Dosierkanals (3) an einer Dosieröffnung (7) davon in einer solchen Weise angeordnet ist, dass ermöglicht oder verhindert wird, dass das Produkt (P) austritt, wobei die Dosieröffnung (7) einen Querschnitt mit einer divergierenden Form in der Richtung einer Öffnungslängsbewegung des Verschlusselements (4) aufweist, wobei der Querschnitt in einer Ebene angeordnet ist, die zu einer Fallrichtung (A) des Produkts (P) quer und zur Bewegungsrichtung (B) des Verschlusselements (4) parallel ist, **dadurch gekennzeichnet, dass** die Dosieröffnung (7) eine erste Querkante (11) umfasst, die mit dem Verschlusselement (4) in einer geschlossenen Position (C) in Eingriff steht, und mit einem Raum (13) versehen ist, der das Produkt aufnehmen kann, wenn das Verschlusselement (4) in die geschlossene Position (C) bewegt und dort angeordnet wird.

2. Vorrichtung nach Anspruch 1, wobei der Querschnitt der Dosieröffnung (7) eine divergierende Form ausgehend von einer ersten Querkante (11) der Dosieröffnung (7) aufweist, wobei an der ersten Querkante (11), die zur Bewegungsrichtung (B) quer liegt, das Verschlusselement (4) in einer geschlossenen Position (C) der Dosieröffnung (7) anliegt.

3. Vorrichtung nach Anspruch 1 oder 2, wobei der Querschnitt der Dosieröffnung (7) eine Querabmessung aufweist, die von einem minimalen Wert (L1) an der ersten Querkante (11) bis zu einem maximalen Wert (L2) an einer zweiten Querkante (12) zunimmt, die zur ersten Querkante (11) in Bezug auf eine Längsabmessung (H) parallel zur Bewegungsrichtung (B) entgegengesetzt ist, so dass ein Durchgangsquerschnitt, der durch das Verschlusselement (4) mit der Verschlussöffnung (7) definiert ist, in einer nicht-linearen Weise, insbesondere mit einem parabolischen Trend, als Funktion einer linearen Bewegung des Verschlusselements (4) in der Bewegungsrichtung (B) variiert.

4. Vorrichtung nach einem vorangehenden Anspruch, wobei die Dosieröffnung (7) einen Querschnitt mit einer dreieckigen oder trapezförmigen Gestalt aufweist.

5. Vorrichtung nach einem vorangehenden Anspruch, wobei sich der Dosierkanal (3) entlang der Fallrichtung (A) erstreckt.

6. Vorrichtung nach einem vorangehenden Anspruch, wobei die Dosieröffnung (7) und das Verschlusselement (4) in Bezug auf die Fallrichtung (A) geneigt sind, so dass eine erste Querkante (11) der Dosieröffnung (7), an der das Verschlusselement (4) in einer geschlossenen Position (C) anliegt, in Bezug auf die Fallrichtung (A) niedriger liegt als eine zweite Querkante (12) entgegengesetzt zur ersten Querkante (11) in Bezug auf die Bewegungsrichtung (B).

7. Vorrichtung nach Anspruch 6, wobei die Dosieröffnung (7) und das Verschlusselement (4) in Bezug auf die Fallrichtung (A) um einen Winkel (α) geneigt sind, der zwischen 95 °und 120°liegt, ins besondere gleich 105°ist.

8. Vorrichtung nach einem vorangehenden Anspruch mit einer Betätigungseinrichtung (5) zum Bewegen des Verschlusselements (4) entlang der Bewegungsrichtung (B), wobei die Betätigungseinrichtung (5) einen Elektromotor umfasst.

9. Vorrichtung nach Anspruch 8, wobei die Betätigungseinrichtung (5) einen Elektromotor mit einer Positions- und/oder Drehzahlrückmeldungssteuerung, insbesondere einen elektrischen Schrittmotor, der das Verschlusselement (4) durch Steuern der Position und/oder Drehzahl davon bewegen kann, umfasst.

10. Vorrichtung nach Anspruch 8 oder 9 mit einem Stift (6), der durch die Betätigungseinrichtung (5) angetrieben wird und mit dem Verschlusselement (4) durch elastische Einrichtungen (8, 9) verbunden ist.

11. Dosier- und/oder Mischmaschine zum Dosieren und/oder Mischen von Kunststoffprodukten, die aus Körnern und/oder Mikrokörnern und/oder Flocken bestehen, mit mindestens einer Dosiervorrichtung (1) nach einem vorangehenden Anspruch.

## Revendications

1. Appareil de dosage, en particulier associable à une machine de dosage et/ou de mélange, pour doser au moins un produit en matière plastique (P) fait de granules et/ou de micro-granules et/ou de flocons, comprenant au moins une trémie d'alimentation (2) pour contenir ledit produit (P) et pourvu d'une conduite de dosage (3) pour la sortie dudit produit (P) et d'un élément obturateur (4) qui est mobile le long d'une direction de déplacement (B) et agencé pour ouvrir ou fermer ladite conduite de dosage (3) à une ouverture de dosage (7) de celle-ci de manière à permettre ou empêcher la sortie dudit produit (P), dans lequel ladite ouverture de dosage (7) a une section ayant une forme divergente dans la direction d'un mouvement longitudinal d'ouverture dudit élément d'obturation (4), ladite section étant agencée sur un plan qui est transversal à une direction de descente (A) dudit produit (P) et parallèle à ladite direction de déplacement (B) dudit élément obturateur (4), **caractérisé en ce que** ladite ouverture de dosage (7) comporte un premier bord transversal (11) en contact avec ledit élément obturateur (4) dans une position fermée (C) et pourvu d'un espace (13) qui est apte à recevoir du produit lorsque ledit élément obturateur (4) est déplacé et agencé dans ladite position fermée (C).

2. Appareil selon la revendication 1, dans lequel ladite section de ladite ouverture de dosage (7) a une forme divergente débutant à partir d'un premier bord transversal (11) de ladite ouverture de dosage (7), ledit premier bord transversal (11), qui est transversal à ladite direction de déplacement (B), venant en butée contre ledit élément obturateur (4) dans une position fermée (C) de ladite ouverture de dosage (7).

3. Appareil selon la revendication 1 ou 2, dans lequel ladite section de l'ouverture de dosage (7) a une dimension transversale qui augmente à partir d'une valeur minimale (L1) sur ledit premier bord transversal (11) jusqu'à une valeur maximale (L2) sur un second bord transversal (12), qui est opposé au premier bord transversal (11) par rapport à une dimension longitudinale (H) parallèle à ladite direction de déplacement (B) de sorte qu'une section de passage définie par ledit élément obturateur (4) avec ladite ouverture de dosage (7) varie de manière non linéaire, en particulier avec une tendance parabolique, en fonction d'un mouvement linéaire dans la direction de déplacement (B) dudit élément obturateur (4).

4. Appareil selon l'une quelconque des revendications précédentes, dans lequel ladite ouverture de dosage (7) a une section avec une forme triangulaire ou trapézoïdale.

5. Appareil selon l'une quelconque des revendications précédentes, dans lequel ladite conduite de dosage (3) s'étend le long de ladite direction de descente (A).

6. Appareil selon l'une quelconque des revendications précédentes, dans lequel ladite ouverture de dosage (7) et ledit élément obturateur (4) sont inclinés par rapport à ladite direction de descente (A) de sorte qu'un premier bord transversal (11) de ladite ouverture de dosage (7), venant en butée contre ledit élément obturateur (4) dans une position fermée (C), est plus bas, par rapport à ladite direction de descente (A), qu'un second bord transversal (12) opposé audit premier bord transversal (11) par rapport à ladite direction de déplacement (B).

7. Appareil selon la revendication 6, dans lequel ladite ouverture de dosage (7) et ledit élément obturateur (4) sont inclinés par rapport à ladite direction de descente (A) d'un angle (α) compris entre 95° et 120°, en particulier égal à 105°.

8. Appareil selon l'une quelconque des revendications précédentes, comprenant des moyens d'actionnement (5) pour déplacer ledit élément obturateur (4) le long de ladite direction de déplacement (B), lesdits moyens d'actionnement (5) comprenant un moteur électrique.

9. Appareil selon la revendication 8, dans lequel lesdits moyens d'actionnement (5) comprennent un moteur électrique avec une commande asservie de position et/ou de vitesse, en particulier un moteur électrique pas-à-pas qui est apte à déplacer ledit élément obturateur (4) en commandant la position et/ou la vitesse de celui-ci.

10. Appareil selon la revendication 8 ou 9, comprenant une goupille (6) entraînée par lesdits moyens d'actionnement (5) et reliée audit élément obturateur (4) par des moyens élastiques (8, 9).

11. Machine de dosage et/ou de mélange pour doser et/ou mélanger des produits en matière plastique faits de granules et/ou de micro-granules et/ou de flocons, comprenant au moins un appareil de dosage (1) selon l'une quelconque des revendications précédentes.
